# EUROPEAN PATENT APPLICATION

(11) **EP 4 572 518 A1**
(43) Date of publication of application: **18.06.2025**
(21) Application number: 23772739.1
(22) Date of filing: 27.09.2023
(51) Int. Cl.: H04W 76/15, H04B 1/401, H04W 8/02, H04W 8/18, H04W 76/27, H04W 76/38, H04W 88/06

(54) **ELECTRONIC DEVICE FOR SUPPORTING PLURALITY OF SIMS AND OPERATING METHOD THEREOF**

(30) Priority: 29.09.2022 KR 20220124520; 17.10.2022 KR 20220133061
(71) Applicant: Samsung Electronics Co., Ltd., Suwon-si, Gyeonggi-do 16677 (KR)
(72) Inventor: LEE, Sanghyun, Suwon-si Gyeonggi-do 16677 (KR); SHIM, Byeongho, Suwon-si Gyeonggi-do 16677 (KR); CHO, Seungmoo, Suwon-si Gyeonggi-do 16677 (KR)
(74) Representative: HGF
(86) International application number: PCT/KR2023/015000
(87) International publication number: WO 2024/072084

(57) **Abstract**

According to an embodiment, an electronic device may comprise an RF circuit and at least one processor. The at least one processor may be configured to allocate a first RF path of the RF circuit to a first network communication corresponding to a first SIM during a first period and a second network communication corresponding to a second SIM during a second period, wherein the first SIM is activated during the first period and the second SIM is activated during the second period. The at least one processor may be configured to identify an occurrence of a timer start event associated with a disconnection of the second network communication. The at least one processor may be configured to start a timer having information about an area to which the electronic device is connected within the second network communication and/or an expiration time corresponding to the timer start event, based on identifying the occurrence of the timer start event. The at least one processor may be configured to perform a TAU procedure based on elapse of the expiration time of the timer. Other various embodiments are possible as well.

## Description

### [Technical Field]

Various embodiments of the disclosure relate to an electronic device supporting a plurality of SIMs and a method for operating the same.

### [Background Art]

In a wireless communication system, an electronic device (e.g., user equipment (UE)) may access a wireless communication network and use a voice communication or data communication service either in a fixed position or while on the move. To provide a communication service to an electronic device, an appropriate authentication process is required. A universal integrated circuit card (UICC) is inserted into the electronic device, and authentication is performed between the electronic device and the server of the mobile network operator (MNO) through a universal subscriber identity module (USIM) installed in the UICC. The UICC may be called a subscriber identity module (SIM) in the case of a global system for mobile communications (GSM) and a universal subscriber identity module (USIM) in the case of wideband code division multiple access (WCDMA), and long term evolution (LTE). The USIM card or SIM card may be provided as a standalone UICC or may be embedded (e.g., embedded SIM, eSIM) in the electronic device, or may be integrated into at least one chip included in the electronic device (e.g., integrated SIM, iSIM).

If the user of the electronic device subscribes to a wireless communication service provided by the mobile network operator, the mobile network operator may provide a UICC (e.g., a SIM card or a USIM card) to the user. The user may insert the provided UICC into her electronic device. According to an embodiment, when the user of the electronic device subscribes to the wireless communication service provided by the mobile network operator, the user may receive information to be stored in the UICC (e.g., eSIM card or iSIM card) included in the electronic device from the mobile network operator. If the UICC is inserted into the electronic device or the information to be stored in the UICC is received from the mobile network operator, the USIM application installed in the UICC may perform an appropriate authentication process with the mobile network operator's server, which stores the same value, using the international mobile subscriber identity (IMSI) value stored in the UICC and the encryption key value for authentication. After the appropriate authentication process is performed, the wireless communication service may be used.

When information related to the SIM is provided to the UICC (e.g., eSIM or iSIM) installed in the electronic device from the server of the mobile network operator, an appropriate authentication process may be performed with the server of the mobile network operator which stores the same value using an encryption key value for authentication. The authentication process may also use the international mobile subscriber identity (IMSI) value which may be generated through information related to the SIM or included in the SIM-related information. After the appropriate authentication process is performed, the wireless communication service may be used.

The electronic device may support two or more SIMs, which may be referred to as a dual-SIM or multi-SIM electronic device. Mounting two or more SIM cards in an electronic device may mean that at least two or more independent UICCs are configured. Or, mounting two or more SIM cards in an electronic device may mean that at least one or more independent UICCs and at least one or more eSIM cards are configured. Or, mounting two or more SIM cards in an electronic device may mean that at least one or more independent UICCs and at least one or more iSIM card are configured. Or, mounting two or more SIM cards in an electronic device may mean that an eSIM card or iSIM card supporting at least two or more networks is configured. A dual-SIM or multi-SIM electronic device may support multiple SIMs, and each SIM may be associated with a different subscription. A mode in which one transceiver transmits and receives signals associated with a plurality of SIMs may be referred to as a dual-SIM dual-standby (DSDS) mode. In this case, if one SIM transmits or receives a signal, the other SIM may be in the standby mode. A mode capable of simultaneous activation of both the SIMs may be referred to as a dual-SIM dual-active (DSDA) mode.

In a DSDS mode, if a standby time for a first SIM is reduced then there is more time for the second SIM to transmit or receive data. However, if the standby time of the first SIM is too short, there may be errors. On the other hand, if the standby time of the first SIM is too long, the data throughput of the other SIM is unnecessarily lower than it could have been.

### [Disclosure of Invention]

### [Solution to Problems]

According to an embodiment, an electronic device may comprise a radio frequency, RF, circuit and at least one processor. The at least one processor may be configured to allocate a first RF path of the RF circuit to a first network communication corresponding to a first SIM during a first period and a second network communication corresponding to a second SIM during a second period, wherein the first SIM is activated during the first period and the second SIM is activated during the second period. The at least one processor may be configured to identify an occurrence of a timer start event associated with a disconnection of the second network communication. The at least one processor may be configured to start a timer in response to identifying the occurrence of the timer start event, wherein an expiration time of the timer is set according to an area to which the electronic device is connected, the area associated with the second network communication and/or the timer start event. The at least one processor may be configured to perform a TAU procedure in response to an elapse of the expiration time of the timer.

According to an embodiment, a method for operating an electronic device may comprise allocating a first RF path of a radio frequency, RF, circuit of the electronic device to a first network communication corresponding to a first SIM during a first period and a second network communication corresponding to a second SIM during a second period, wherein the first SIM is activated during the first period and the second SIM is activated during the second period. The method for operating the electronic device may comprise identifying an occurrence of a timer start event associated with a disconnection of the second network communication. The method for operating the electronic device may comprise starting a timer in response to identifying the occurrence of the timer start event, wherein an expiration time of the timer is set according to an area to which the electronic device is connected, the area associated with the second network communication and/or the timer start event. The method for operating the electronic device may comprise performing a TAU procedure in response to an elapse of the expiration time of the timer.

According to an embodiment, in a storage medium storing at least one computer-readable instruction, the at least one instruction, when executed by at least one processor of an electronic device, may enable the electronic device to perform at least one operation. The at least one operation may comprise allocating a first RF path of an RF circuit of the electronic device to a first network communication corresponding to a first SIM during a first period and a second network communication corresponding to a second SIM during a second period, wherein the first SIM is activated during the first period and the second SIM is activated during the second period. The at least one operation may comprise identifying an occurrence of a timer start event associated with a disconnection of the second network communication. The at least one operation may comprise starting a timer in response to identifying the occurrence of the timer start event, wherein an expiration time of the timer is set according to an area to which the electronic device is connected, the area associated with the second network communication and/or the timer start event. The at least one operation may comprise performing a TAU procedure in response to an elapse of the expiration time of the timer.

Advantageously, the present invention enables the inactivity time of the SIM which is transmitting or receiving data from a first communication network to be more optimally set. The local release time of the other SIM from a second communication network can be dynamically determined so that it is not necessary to wait for an RRC release message to be received before the other SIM is released from the network. Releasing the other SIM according to the determined local release time enables the SIM which was transmitting or receiving data from the first communication network to return to the transmitting or receiving sooner. The data throughput of this SIM is therefore increased.

### [Brief Description of Drawings]

FIG. 1A is a block diagram illustrating an electronic device in a network environment according to an embodiment;
FIG. 1B is a view illustrating a network environment including an electronic device according to various embodiments;
FIG. 2A is a block diagram illustrating an electronic device for supporting legacy network communication and 5G network communication according to an embodiment;
FIG. 2B is a block diagram illustrating an electronic device for supporting legacy network communication and 5G network communication according to an embodiment;
FIG. 3 is a view illustrating an allocation of an RF path for a SIM according to an embodiment;
FIG. 4A is a flowchart illustrating an operation method of an electronic device according to an embodiment;
FIG. 4B is a view illustrating an allocation of an RF path for a SIM according to an embodiment;
FIG. 4C is a flowchart illustrating an operation method of an electronic device according to an embodiment;
FIG. 5 is a flowchart illustrating an operation method of an electronic device according to an embodiment;
FIG. 6 is a flowchart illustrating an operation method of an electronic device according to an embodiment;
FIG. 7A is a view illustrating a method for measuring an expiration time of a timer according to an embodiment;
FIG. 7B is a view illustrating a method for measuring an expiration time of a timer according to an embodiment;
FIG. 8 is a view illustrating an operation method of an electronic device according to an embodiment;
FIG. 9 is a view illustrating an operation method of an electronic device according to an embodiment; and
FIG. 10 is a view illustrating an operation method of an electronic device according to an embodiment.

### [Mode for the Invention]

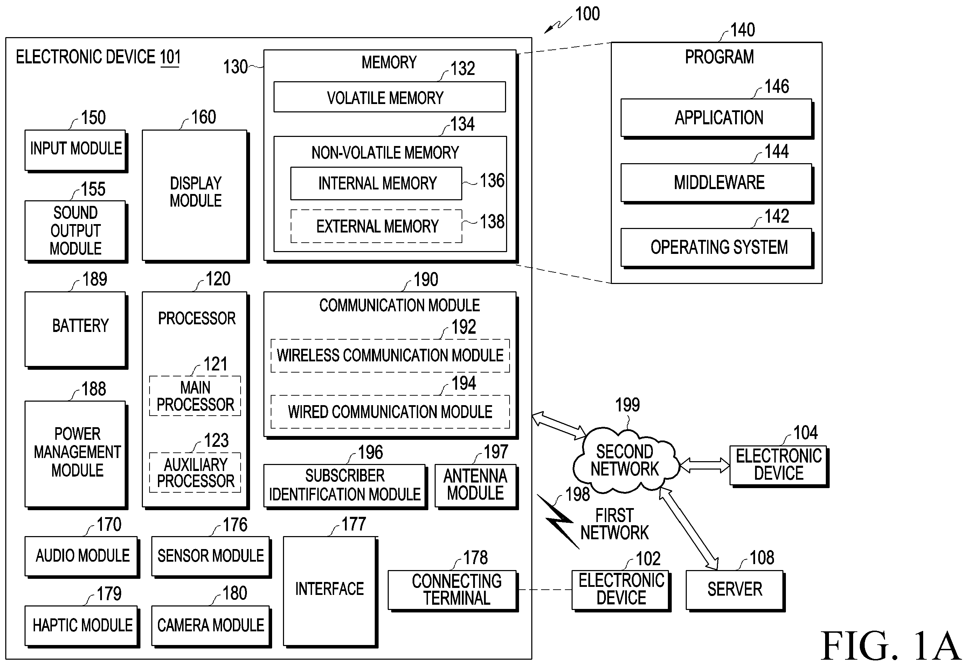

FIG. 1A is a block diagram illustrating an electronic device 101 in a network environment 100 according to an embodiment. Referring to FIG. 1A, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductive body or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

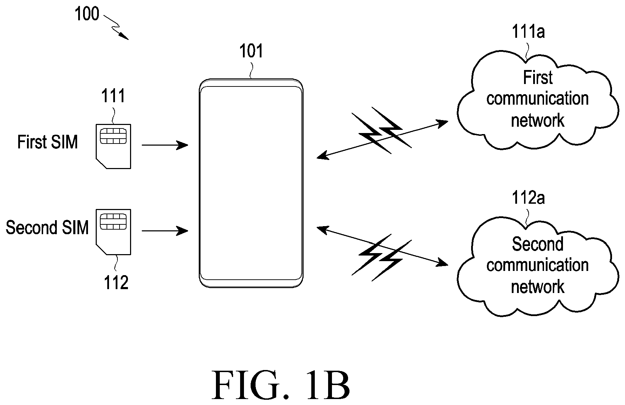

FIG. 1B is a view illustrating a network environment 100 including an electronic device according to various embodiments. Referring to FIG. 1B, according to various embodiments of the present invention, a network 100 may include an electronic device 101, a first communication network 111a, a second communication network 112a, or a third communication network (not shown).

According to various embodiments, the electronic device 101 may operate in a dual SIM dual standby (DSDS) mode supporting a plurality of SIMs in one device. For example, the electronic device 101 may be equipped with two SIMs, e.g., a first SIM 111 and a second SIM 112. The first SIM 111 and the second SIM 112 may be removable SIMs (rSIMs). The rSIM may be a SIM detachable from a slot provided in the electronic device 101 and its form/specifications are not limited to specific ones. For example, the electronic device 101 may be equipped with two SIM card slots to support the two SIMs. According to an embodiment, for convenience of description, the first SIM 111 and the second SIM 112 are shown as SIM cards, but are not limited thereto. For example, one of the first SIM 111 or the second SIM 112 may be an embedded SIM (eSIM) or an integrated SIM (iSIM). Hereinafter, for convenience of description, the SIM card will be referred to as a SIM. As illustrated in FIG. 1B, two SIM cards, the first SIM 111 and the second SIM 112, may be mounted in the electronic device 101. The electronic device 101 may include a first slot (not shown) and a second slot (not shown), which are first structures, to receive the first SIM 111 and the second SIM 112, respectively.

For example, the first SIM 111 is a SIM which has a subscription to the mobile network operator of the first communication network 111a. The electronic device 101 may access the first communication network 111a using the first SIM 111 to receive the wireless communication service. The second SIM 112 is a SIM which has a subscription to the mobile network operator of the second communication network 112a. The electronic device 101 may access the second communication network 112a using the second SIM 112 to receive the wireless communication service. The first communication network 111a and the second communication network 112a may be provided by the same communication carrier or may be provided by different communication carriers, separately. When the first communication network 111a and the second communication network 112a are provided by the same mobile network operator, the first communication network 111a and the second communication network 112a may be the same network. Or, different operators may share a communication network. For example, a first mobile network operator may use the first communication network 111a, and a second mobile network operator may be configured to also use the first communication network 111a. According to an embodiment, although not shown, one of ordinary skill in the art will easily understand that the electronic device 101 may further include at least one additional SIM, and the number or type of SIMs is not limited.

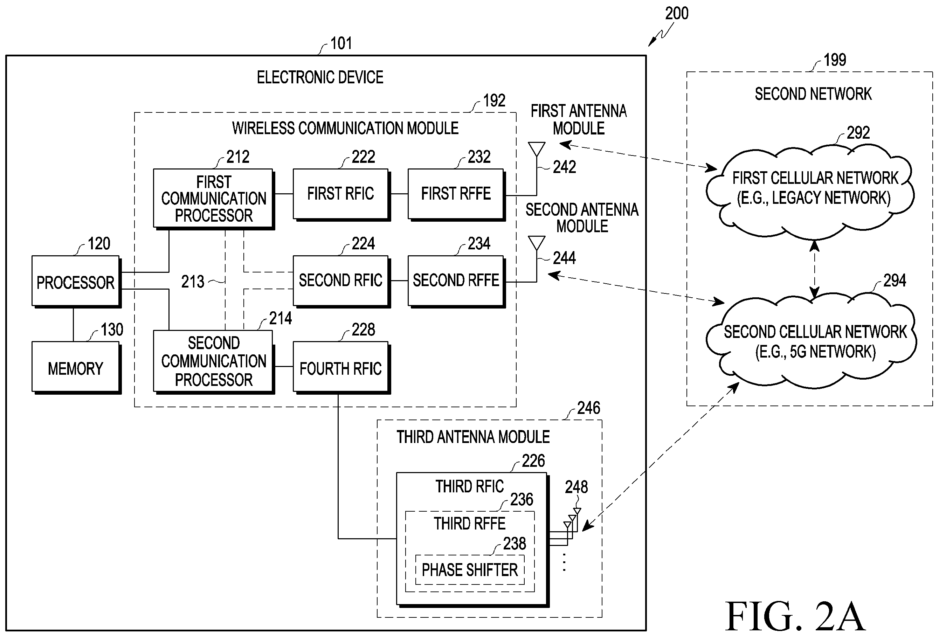

FIG. 2A is a block diagram 200 illustrating an electronic device 101 for supporting legacy network communication and 5G network communication according to an embodiment. Referring to FIG. 2A, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, a third antenna module 246, and antennas 248. The electronic device 101 may further include a processor 120 and a memory 130. The second network 199 may include a first cellular network 292 and a second cellular network 294. According to another embodiment, the electronic device 101 may further include at least one component among the components of FIG. 1, and the second network 199 may further include at least one other network. According to an embodiment, the first communication processor 212, the second communication processor 214, the first RFIC 222, the second RFIC 224, the fourth RFIC 228, the first RFFE 232, and the second RFFE 234 may form at least part of the wireless communication module 192. According to another embodiment, the fourth RFIC 228 may be omitted or be included as part of the third RFIC 226.

The first communication processor 212 may establish a communication channel of a band that is to be used for wireless communication with the first cellular network 292 or may support legacy network communication via the established communication channel. According to an embodiment, the first cellular network may be a legacy network that includes second generation (2G), third generation (3G), fourth generation (4G), or long-term evolution (LTE) networks. The second communication processor 214 may establish a communication channel corresponding to a designated band (e.g., from about 6GHz to about 60GHz) among bands that are to be used for wireless communication with the second cellular network 294 or may support fifth generation (5G) network communication via the established communication channel. According to an embodiment, the second cellular network 294 may be a 5G network defined by the 3rd generation partnership project (3GPP). Additionally, according to an embodiment, the first communication processor 212 or the second communication processor 214 may establish a communication channel corresponding to another designated band (e.g., about 6GHz or less) among the bands that are to be used for wireless communication with the second cellular network 294 or may support fifth generation (5G) network communication via the established communication channel.

The first communication processor 212 may perform data transmission/reception with the second communication processor 214. For example, data classified as transmitted via the second cellular network 294 may be changed to be transmitted via the first cellular network 292. In this case, the first communication processor 212 may receive transmission data from the second communication processor 214. For example, the first communication processor 212 may transmit/receive data to/from the second communication processor 214 via an inter-processor interface 213. The inter-processor interface 213 may be implemented as, e.g., universal asynchronous receiver/transmitter (UART) (e.g., high speed-UART (HS-UART)) or peripheral component interconnect bus express (PCIe) interface, but is not limited to a specific kind. The first communication processor 212 and the second communication processor 214 may exchange packet data information and control information using, e.g., a shared memory. The first communication processor 212 may transmit/receive various types of information, such as sensing information, information about output strength, and resource block (RB) allocation information, to/from the second communication processor 214.

According to an implementation, the first communication processor 212 may not be directly connected with the second communication processor 214. In this case, the first communication processor 212 may transmit/receive data to/from the second communication processor 214 via a processor 120 (e.g., an application processor). For example, the first communication processor 212 and the second communication processor 214 may transmit/receive data to/from the processor 120 (e.g., an application processor) via an HS-UART interface or PCIe interface, but the kind of the interface is not limited thereto. The first communication processor 212 and the second communication processor 214 may exchange control information and packet data information with the processor 120 (e.g., an application processor) using a shared memory.

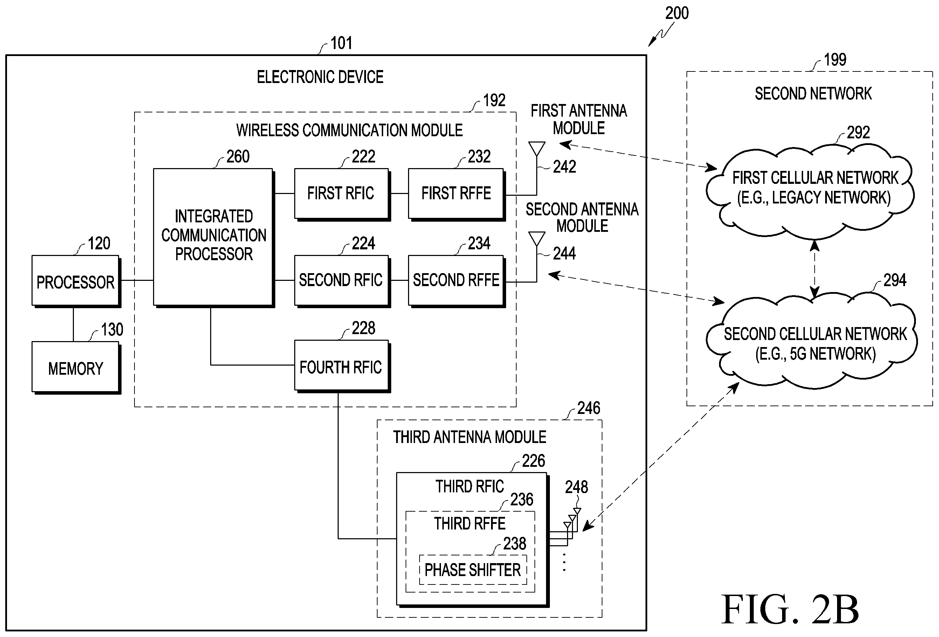

According to an embodiment, the first communication processor 212 and the second communication processor 214 may be implemented in a single chip or a single package. According to an embodiment, the first communication processor 212 or the second communication processor 214, along with the processor 120, an assistance processor 123, or communication module 190, may be formed in a single chip or single package. For example, as shown in FIG. 2B, an integrated communication processor 260 may support all of the functions for communication with the first cellular network 292 and the second cellular network 294.

As described above, at least one of the processor 120, the first communication processor 212, the second communication processor 214, or the integrated communication processor 260 may be implemented as a single chip or a single package. In this case, the single chip or single package may include a memory (or storage means) storing instructions that cause at least some of operations performed according to an embodiment and a processing circuit (or operation circuit, but the term is not limited) for executing instructions.

As part of the process of transmitting a radio frequency signal to the first cellular network, the first RFIC 222 may convert a baseband signal generated by the first communication processor 212 into a radio frequency (RF) signal with a frequency ranging from about 700MHz to about 3GHz which is used by the first cellular network 292 (e.g., a legacy network). As part of the process of receiving an RF signal from the first network, the RF signal may be obtained from the first network 292 (e.g., a legacy network) through an antenna (e.g., the first antenna module 242) and be pre-processed via an RFFE (e.g., the first RFFE 232). The first RFIC 222 may convert the pre-processed RF signal into a baseband signal that may be processed by the first communication processor 212.

As part of the process of transmitting an RF signal to the second cellular network, the second RFIC 224 may convert the baseband signal generated by the first communication processor 212 or the second communication processor 214 into a Sub6-band (e.g., about 6GHz or less) RF signal (hereinafter, "5G Sub6 RF signal") that is used by the second cellular network 294 (e.g., a 5G network). As part of the process of receiving an RF signal from the second cellular network, the 5G Sub6 RF signal may be obtained from the second cellular network 294 (e.g., a 5G network) through an antenna (e.g., the second antenna module 244) and be pre-processed via an RFFE (e.g., the second RFFE 234). The second RFIC 224 may convert the pre-processed 5G Sub6 RF signal into a baseband signal that may be processed by a corresponding processor of the first communication processor 212 and the second communication processor 214.

The third RFIC 226 may convert the baseband signal generated by the second communication processor 214 into a 5G Above6 band (e.g., about 6GHz to about 60GHz) RF signal (hereinafter, "5G Above6 RF signal") that is to be used by the second cellular network 294 (e.g., a 5G network). Upon receipt, the 5G Above6 RF signal may be obtained from the second cellular network 294 (e.g., a 5G network) through an antenna (e.g., the antenna 248) and be pre-processed via the third RFFE 236. The third RFIC 226 may convert the pre-processed 5G Above6 RF signal into a baseband signal that may be processed by the second communication processor 214. According to an embodiment, the third RFFE 236 may be formed as part of the third RFIC 226.

According to an embodiment, the electronic device 101 may include the fourth RFIC 228 separately from, or as at least part of, the third RFIC 226. In this case, the fourth RFIC 228 may convert the baseband signal generated by the second communication processor 214 into an intermediate frequency band (e.g., from about 9GHz to about 11GHz) RF signal (hereinafter, "IF signal") and transfer the IF signal to the third RFIC 226. The third RFIC 226 may convert the IF signal into a 5G Above6 RF signal. Upon receipt, the 5G Above6 RF signal may be received from the second cellular network 294 (e.g., a 5G network) through an antenna (e.g., the antenna 248) and be converted into an IF signal by the third RFIC 226. The fourth RFIC 228 may convert the IF signal into a baseband signal that may be processed by the second communication processor 214.

According to an embodiment, the first RFIC 222 and the second RFIC 224 may be implemented as at least part of a single chip or single package. According to an embodiment, when the first RFIC 222 and the second RFIC 224 in FIG. 2A or 2B are implemented as a single chip or a single package, they may be implemented as an integrated RFIC. In this case, the integrated RFIC is connected to the first RFFE 232 and the second RFFE 234 to convert a baseband signal into a signal of a band supported by the first RFFE 232 and/or the second RFFE 234, and may transmit the converted signal to one of the first RFFE 232 and the second RFFE 234. According to an embodiment, the first RFFE 232 and the second RFFE 234 may be implemented as at least part of a single chip or single package. According to an embodiment, at least one of the first antenna module 242 or the second antenna module 244 may be omitted or be combined with another antenna module to process multi-band RF signals.

According to an embodiment, the third RFIC 226 and the antenna 248 may be disposed on the same substrate to form the third antenna module 246. For example, the wireless communication module 192 or the processor 120 may be disposed on a first substrate (e.g., a main painted circuit board (PCB)). In this case, the third RFIC 226 and the antenna 248, respectively, may be disposed on one area (e.g., the bottom) and another (e.g., the top) of a second substrate (e.g., a sub PCB) which is provided separately from the first substrate, forming the third antenna module 246. Placing the third RFIC 226 and the antenna 248 on the same substrate may shorten the length of the transmission line therebetween. This may reduce a loss (e.g., attenuation) of high-frequency band (e.g., from about 6GHz to about 60GHz) signal used for 5G network communication due to the transmission line. Thus, the electronic device 101 may enhance the communication quality with the second network 294 (e.g., a 5G network).

According to an embodiment, the antenna 248 may be formed as an antenna array which includes a plurality of antenna elements available for beamforming. In this case, the third RFIC 226 may include a plurality of phase shifters 238 corresponding to the plurality of antenna elements, as part of the third RFFE 236. Upon transmission, the plurality of phase shifters 238 may change the phase of the 5G Above6 RF signal which is to be transmitted to the outside (e.g., a 5G network base station) of the electronic device 101 via their respective corresponding antenna elements. Upon receipt, the plurality of phase shifters 238 may change the phase of the 5G Above6 RF signal received from the outside to the same or substantially the same phase via their respective corresponding antenna elements. This enables transmission or reception via beamforming between the electronic device 101 and the outside.

The second cellular network 294 (e.g., a 5G network) may be operated independently (e.g., as standalone (SA)) from, or in connection (e.g., as non-standalone (NSA)) with the first cellular network 292 (e.g., a legacy network). For example, the 5G network may have the access network (e.g., 5G radio access network (RAN) or next generation RAN (NG RAN)) but may not have the core network (e.g., next generation core (NGC)). In this case, the electronic device 101, after accessing a 5G network access network, may access an external network (e.g., the Internet) under the control of the core network (e.g., the evolved packet core (EPC)) of the legacy network. Protocol information (e.g., LTE protocol information) for communication with the legacy network or protocol information (e.g., New Radio (NR) protocol information) for communication with the 5G network may be stored in the memory 230 and be accessed by other components (e.g., the processor 120, the first communication processor 212, or the second communication processor 214).

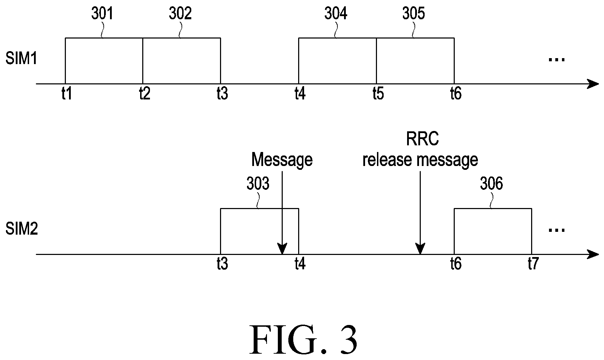

FIG. 3 is a view illustrating an allocation of an RF path for a SIM according to an embodiment.

According to an embodiment, in a DSDS mode, the electronic device 101 (e.g., the first communication processor 212, the second communication processor 214, and/or the integrated communication processor 260) may allocate an RF path of an RF circuit (e.g., the first RFIC 222, the second RFIC 224, the fourth RFIC 228, the first RFFE 232, the second RFFE 234, and/or the third antenna module 246) to a first network communication corresponding to any one SIM, e.g., the first SIM 111. In the DSDS mode, since network communications of two or more SIMs may not simultaneously use one RF path, the second network communication corresponding to the second SIM 112 may not be performed during this time. Meanwhile, the electronic device 101 may allocate the RF path to the second network communication corresponding to the second SIM 112 for a relatively short period of time periodically (e.g., a DRX cycle but not limited), identifying whether paging based on the second network communication is received. When paging is received, the electronic device 101 may allocate the use of the RF path exclusively to the second network communication corresponding to the second SIM 112 or allocate the use of the RF path time-divisionally to the first network communication corresponding to the first SIM 111 and the second network communication corresponding to the second SIM 112.

For example, as shown in FIG. 3, the electronic device 101 may time-divisionally allocate the RF path to the first network communication corresponding to the first SIM 111 and to the second network communication corresponding to the second SIM 112. For convenience of description, this may be referred to as a connected mode. For example, referring to FIG. 3, use of the RF path for the first period 301 (t1 to t2) and the second period 302 (t2 to t3) may be allocated to the first SIM 111. Thereafter, use of the RF path for the third period 303 (t3 to t4) may be allocated to the second SIM 111. Thereafter, use of the RF path for the fourth period 304 (t4 to t5) and the fifth period 305 (t5 to t6) may be allocated to the first SIM 111. Then, use of the RF path for the sixth period 306 (t6 to t7) may be allocated to the second SIM 111. In the embodiment of FIG. 3, it has been described that the time allocated to the network corresponding to the first SIM 111 is larger than the time allocated to the network corresponding to the second SIM 112, but this is exemplary, and the times may be the same. The electronic device 101 may receive a message from the second network communication network through the RF path during, e.g., the third period 303. That is, the electronic device 101 may receive a message from the second network communication network through the RF path during a time that the use of the RF path is allocated to the second SIM 111.

Meanwhile, the network of the second network communication may transmit an RRC release message (e.g., RRCRelease message, or RRCConnectionRelease message) to the electronic device 101. For example, the network may transmit an RRC release message to the electronic device 101 when there is no message to be transmitted/received with the electronic device 101 for a certain period of time after transmitting the message. If the RRC release message is received while the RF path is allocated to the second network communication corresponding to the second SIM 112, the electronic device 101 may release the RRC connection for the second network communication. However, as shown in FIG. 3, if an RRC release message is transmitted by the network while the RF path is allocated to the first network communication corresponding to the first SIM 111, the electronic device 101 may not receive the RRC release message. As the reception of the RRC release message fails, the electronic device 101 maintains the RRC connected state. Accordingly, even though the second SIM 112 no longer needs to be allocated the use of the RF path, there is a possibility that the RF path is to be time-divisionally allocated to the first SIM 111 and the second SIM 112. For example, although the electronic device 101 may allocate the sixth period 306 to the first SIM 111, there is a possibility of allocating the sixth period 306 to the second SIM 112. According to an embodiment, the electronic device 101 may start a timer based on a designated event associated with an RRC release, and when expiration of the timer is identified, perform an operation for local release, e.g., tracking area update (TAU) procedure. When the expiration time of the timer is set to be too long, the period during which the SIMs time-divisionally share the RF path may increase. When the expiration time of the timer is set to be too short, if there is a message to be transmitted from the network, there is a possibility that the electronic device 101 fails to receive the message. Accordingly, appropriate settings of the expiration time of the timer may be required. For example, the period required for the network to transmit the RRC release message after processing the last message with a specific UE may be set to differ for each network operator, and/or for each registration area (e.g., tracking area (TA), routing area (RA), location area (LA), and/or cell (PCI), but not limited). For example, the period required for the network to transmit the RRC release message after processing the last message with a specific UE may be set to differ for each type of last message. Accordingly, a timer expiration time corresponding to an event associated with the connection area (or, registration area) of the electronic device 101 and/or RRC release may be set. According to an embodiment, the electronic device 101 may dynamically set the expiration time of the timer based on the connection area of the electronic device 101 and/or an event associated with RRC release.

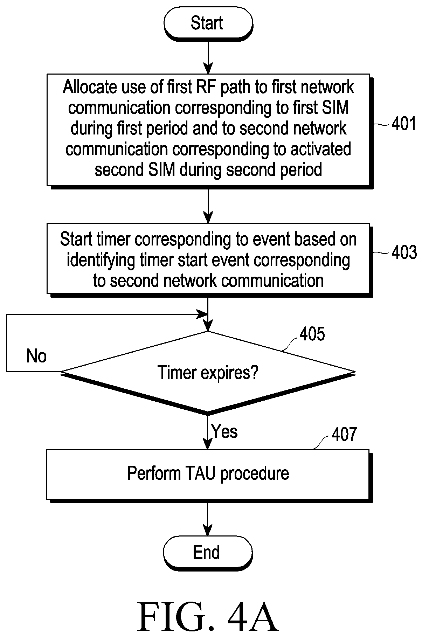

FIG. 4A is a flowchart illustrating an operation method of an electronic device according to an embodiment.

According to an embodiment, the electronic device 101 (e.g., the first communication processor 212, the second communication processor 214, and/or the integrated communication processor 260) may allocate a first RF path of an RF circuit (e.g., the first RFIC 222, the second RFIC 224, the fourth RFIC 228, the first RFFE 232, the second RFFE 234, and/or the third antenna module 246) to a first network communication corresponding to the first SIM 111 during a first period and allocate the first RF path to a second network communication corresponding to the second SIM 112 during a second period in operation 401. In operation 403, the electronic device 101 may start a timer corresponding to the designated event associated with an RRC release based on identifying a timer start event corresponding to the second network communication.

In one example, the timer start event may be transmission and/or reception of a message of a type associated with RRC release. For example, the IMS standard specifies the transmission/reception of messages for a specific procedure. Meanwhile, after the last message transmitted/received in a specific procedure is processed, the possibility of transmission/reception of an additional message is low unless another procedure is initiated. A low possibility of transmission/reception of the additional message may mean a high probability of occurrence of RRC release. Among the messages specified in the specific procedure, the last message may be an example of a message of a type associated with RRC release. The specific procedure may be, e.g., a procedure defined in the IMS standard, and/or a procedure defined in a standard associated with the control plane, but the invention is not limited to these examples. In one example, the timer start event may be a transmission and/or reception of a message of a type associated with RRC release. For example, the electronic device 101 may start the timer whenever a message is transmitted and/or received. The timer may be restarted if a message is transmitted and/or received before the timer expires. The electronic device 101 may set an expiration time of the timer corresponding to the IMS-related message, an expiration time of the timer corresponding to the control plane, and/or an expiration time of the timer corresponding to the user plane, but is not limited thereto.

In one example, the timer (or expiration time of the timer) may be set for each event. For example, a first expiration time may be set corresponding to a transmission and/or reception of the message associated with the IMS standard, a second expiration time may be set corresponding to a transmission and/or reception of the message associated with the control plane, and the first expiration time and the second expiration time may be different. Alternatively, the expiration time set corresponding to the first procedure (e.g., registration procedure) of the IMS standard and the expiration time set corresponding to the second procedure (e.g., session release procedure) of the IMS standard may be set to differ from each other. Accordingly, the electronic device 101 may start the timer with a different expiration time for each event, but there is no limitation, and one of ordinary skill in the art will understand that the timer with the same expiration time may be started for all events.

In an embodiment, the electronic device 101 may store the expiration time of the timer for each event based on a measurement result for each event. For example, the electronic device 101 may measure the time at which the RRC release message is received from the network for each event, and may store the expiration time of the timer based on the measurement result. In another example, the electronic device 101 may receive the expiration time of the timer for each event from the network or the server of the network operator. The expiration time of the timer may be renewed.

In an embodiment, the electronic device 101 may identify whether the timer expires in operation 405. Before the timer expires (no in 405), if an RRC release message based on, or associated with the second network communication corresponding to the second SIM 112 is received, the electronic device 101 may release the RRC connection based on the second network communication corresponding to the second SIM 112 based on the RRC release message. Thereafter, the electronic device 101 may allocate the use of the first RF path exclusively to the first network communication corresponding to the first SIM 111 (or except for the monitoring period of the second network communication). If the timer expires (yes in 405), in operation 407, the electronic device 101 may perform a TAU procedure for local release. For example, the electronic device 101 may transmit an RRC CONNECTION REQUEST to request a new RRC CONNECTION from the network and accordingly perform a TAU procedure, but is not limited thereto. For example, a non-access stratum (NAS) entity of the electronic device 101 may request an access stratum (AS) entity to transmit a TAU request. In the RRC_idle state, the AS entity needs to establish an RRC connection for transmission of the TAU request. Accordingly, the electronic device 101 (e.g., AS entity) may transmit an RRC CONNECTION REQEUST. The network may transmit an RRC CONNECTION SETUP message to the electronic device 101 in response to the RRC CONNECTION REQEUST. The network may identify the electronic device 101 as being in the RRC_idle state, e.g., based on reception of the RRC CONNECTION REQUEST, but is not limited thereto. The electronic device 101 may transmit an RRC CONNECTION SETUP COMPLETE message to the network in response to the RRC CONNECTION SETUP message. The RRC CONNECTION SETUP COMPLETE message may include a NAS message of TAU REQUEST. Thereafter, an EPS mobile management (EMM) procedure may be performed, but network communication is not limited. The electronic device 101 may receive a TAU Accept from the network, for example. For example, the electronic device 101 may transmit a TAU complete in response to the TAU Accept. That is, the electronic device performs a release of the RRC connection in response to either receiving an RRC release message or expiration of the timer, whichever happens first.

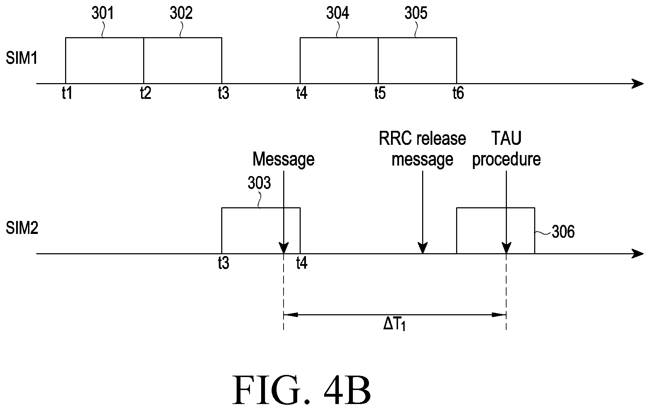

Thereafter, the electronic device 101 may allocate the use of the first RF path exclusively to the first network communication corresponding to the first SIM 111 (or except for the monitoring period of the second network communication). As described above, even when reception of the RRC release message fails as described in FIG. 3, local release may be performed, which is described with reference to FIG. 4B.

FIG. 4B is a view illustrating an allocation of an RF path for a SIM according to an embodiment.

According to an embodiment, the electronic device 101 may receive a message from the second network communication corresponding to the second SIM 112 during the third period 303. The message may be, e.g., a message associated with RRC release described in FIG. 4A. The electronic device 101 may identify reception of a message associated with RRC release as a timer start event, and may start the timer accordingly. The electronic device 101 may identify, e.g., an expiration time ΔT1 of a timer corresponding to an event, but is not limited thereto. The expiration time ΔT1 of the timer may be a value set corresponding to an event as described above, or a default value (e.g., 12 seconds, but not limited thereto). The default value may be larger than the time (e.g., 10 seconds) typically required by the network, but is not limited thereto. As shown in FIG. 4B, if the RRC release message based on the second network communication corresponding to the second SIM 112 is transmitted during the fifth period 305, the electronic device 101 may fail to receive the RRC release message. However, the electronic device 101 may perform a TAU procedure for local release based on the elapse of the expiration time ΔT1 of the timer. Based on the performance of the TAU procedure, the RRC connection may be released. Accordingly, even when the electronic device 101 fails to receive the RRC release message based on the second network communication corresponding to the second SIM 112, it may release the RRC connection based on the second network communication.

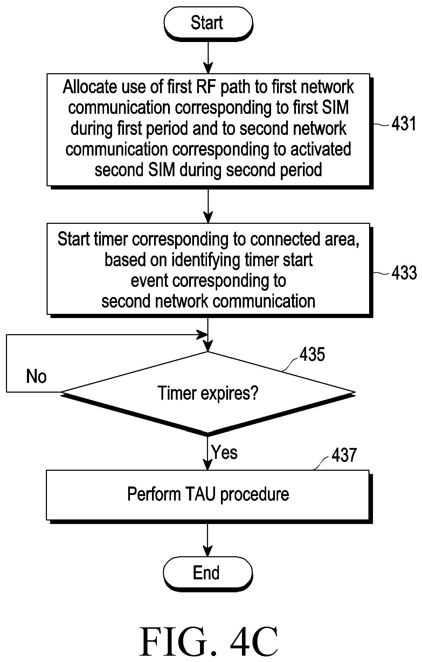

FIG. 4C is a flowchart illustrating a method for operating an electronic device according to an embodiment.

According to an embodiment, the electronic device 101 (e.g., the first communication processor 212, the second communication processor 214, and/or the integrated communication processor 260) may allocate a first RF path of an RF circuit (e.g., the first RFIC 222, the second RFIC 224, the fourth RFIC 228, the first RFFE 232, the second RFFE 234, and/or the third antenna module 246) to a first network communication corresponding to the first SIM 111 during a first period and allocate the first RF path to a second network communication corresponding to the second SIM 112 during a second period in operation 431. In operation 433, the electronic device 101 may start a timer corresponding to the connected area based on or in response to identifying a timer start event corresponding to the second network communication.

For example, there is a possibility that the time required from the last data transmission/reception to RRC release is set to differ for each network operator. For example, the first network operator may establish a policy for transmitting an RRC release message when additional data transmission/reception is not performed from the last data transmission/reception to a first time. For example, the second network operator may establish a policy for transmitting an RRC release message when additional data transmission/reception is not performed from the last data transmission/reception to a second time. The electronic device 101 may set the expiration time of the timer in response to, e.g., a tracking area identifier (TAI). Since the TAI is composed of a mobile country code (MCC), a mobile network code (MNC), and a tracking area code (TAC), the TAI includes an MNC, which is information associated with the network operator. Accordingly, as the expiration time of the timer is set for each TAI, different expiration times of the timer may be set for different policies of network operators. Further, in some cases, there is a possibility that the network operator sets the time required for RRC release to differ for each TA, each RA, or each cell. The electronic device 101 may set the expiration time of the timer for each access area (TA, RA, or cell, but not limited thereto). In operation 435, the electronic device 101 may identify whether the timer expires. Before the timer expires (no in 435), if an RRC release message based on the second network communication corresponding to the second SIM 112 is received, the electronic device 101 may release the RRC connection based on the second network communication corresponding to the second SIM 112 based on the RRC release message. Thereafter, the electronic device 101 may allocate the use of the first RF path exclusively to the first network communication corresponding to the first SIM 111 (or except for the monitoring period of the second network communication). If the timer expires (yes in 435), in operation 437, the electronic device 101 may perform a TAU procedure for local release. Thereafter, the electronic device 101 may allocate the use of the first RF path exclusively to the first network communication corresponding to the first SIM 111 (or except for the monitoring period of the second network communication).

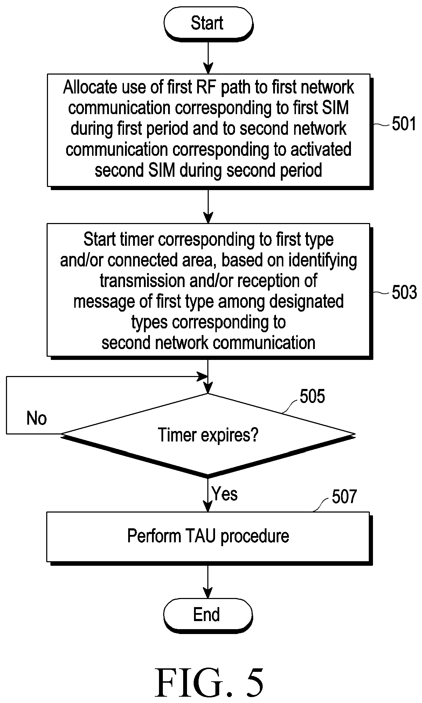

FIG. 5 is a flowchart illustrating an operation method of an electronic device according to an embodiment.

According to an embodiment, the electronic device 101 (e.g., the first communication processor 212, the second communication processor 214, and/or the integrated communication processor 260) may allocate a first RF path of an RF circuit (e.g., the first RFIC 222, the second RFIC 224, the fourth RFIC 228, the first RFFE 232, the second RFFE 234, and/or the third antenna module 246) to a first network communication corresponding to the first SIM 111 during a first period and allocate the first RF path to a second network communication corresponding to the second SIM 112 during a second period in operation 501. In operation 503, the electronic device 101 may start the timer corresponding to receipt of a message of a first type and/or the connected area, based on identifying transmission and/or reception of a message of a first type among designated types corresponding to the second network communication. The designated type of message may be, e.g., the last message among messages transmitted/received in a specific procedure. As described above, the specific procedure may be, e.g., a procedure defined in the IMS standard, and/or a procedure defined in a standard associated with the control plane, but is not limited. As described above, the timer (or expiration time of the timer) may be set to differ for each type of message and/or for each connected area of the electronic device. In one example, the electronic device 101 may identify the timer (or expiration time of the timer) corresponding to the type of message, for example. For example, the expiration time of the timer may be set to differ for each message type. In one example, the electronic device 101 may identify the timer (or expiration time of the timer) corresponding to the connected area, for example. In one example, the electronic device 101 may manage timers (or expiration times of the timers) corresponding to all of the message types and the connected areas, or identify the timer (or expiration time of the timer) corresponding to both. In one example, the electronic device 101 may select the larger of the expiration time of the timer corresponding to the message type and the expiration time of the timer corresponding to the connected area.

In operation 505, the electronic device 101 may identify whether the timer expires. Before the timer expires (no in 505), if an RRC release message based on the second network communication corresponding to the second SIM 112 is received, the electronic device 101 may release the RRC connection based on the second network communication corresponding to the second SIM 112 based on the RRC release message. Thereafter, the electronic device 101 may allocate the use of the first RF path exclusively to the first network communication corresponding to the first SIM 111 (or except for the monitoring period of the second network communication). If the timer expires (yes in 505), in operation 507, the electronic device 101 may perform a TAU procedure for local release. Thereafter, the electronic device 101 may allocate the use of the first RF path exclusively to the first network communication corresponding to the first SIM 111 (or except for the monitoring period of the second network communication).

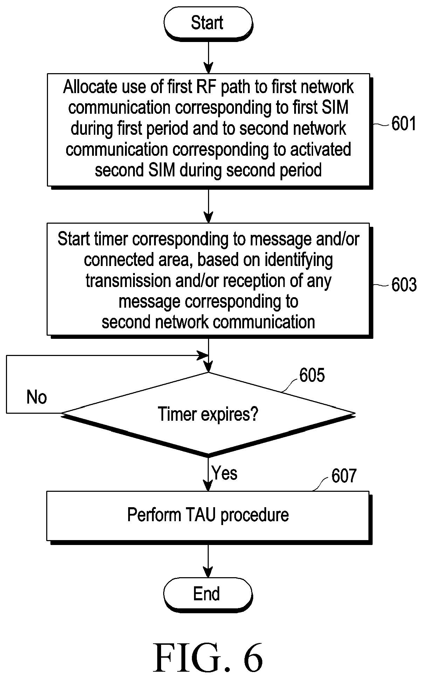

FIG. 6 is a flowchart illustrating an operation method of an electronic device according to an embodiment.

According to an embodiment, the electronic device 101 (e.g., the first communication processor 212, the second communication processor 214, and/or the integrated communication processor 260) may allocate a first RF path of an RF circuit (e.g., the first RFIC 222, the second RFIC 224, the fourth RFIC 228, the first RFFE 232, the second RFFE 234, and/or the third antenna module 246) to a first network communication corresponding to the first SIM 111 during a first period and allocate the first RF path to a second network communication corresponding to the second SIM 112 during a second period in operation 601. In operation 603, the electronic device 101 may start the timer corresponding to any message corresponding to the second network communication and/or the connected area, based on identifying transmission and/or reception of the message. For example, the electronic device 101 may start the timer when any message is transmitted and/or received without limitation on the type of the message. For example, the timer may be started even when an INVITE message is transmitted in an IMS call session establishment procedure, and the timer may also be started upon reception of a 200 OK, and the timer may be started based on transmission and/or reception of any message. 200 OK may be a message used to notify that an operation corresponding to a request has been successfully performed. In contrast to the embodiment of FIG. 5 in which transmission and/or reception of a specific type of message is set as an event for a timer start event, the electronic device 101 may be configured to start the timer based on transmission and/or reception of any message. As described above, the timer (or expiration time of the timer) may be set to differ for each type of message and/or for each connected area. In operation 605, the electronic device 101 may identify whether the timer expires. Before the timer expires (no in 605), if an RRC release message based on the second network communication corresponding to the second SIM 112 is received, the electronic device 101 may release the RRC connection based on the second network communication corresponding to the second SIM 112 based on the RRC release message. Thereafter, the electronic device 101 may allocate the use of the first RF path exclusively to the first network communication corresponding to the first SIM 111 (or except for the monitoring period of the second network communication). If the timer expires (yes in 435), in operation 607, the electronic device 101 may perform a TAU procedure for local release. Thereafter, the electronic device 101 may allocate the use of the first RF path exclusively to the first network communication corresponding to the first SIM 111 (or except for the monitoring period of the second network communication).

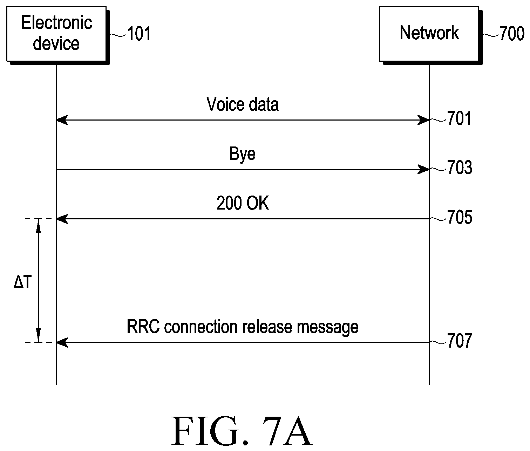

FIG. 7A is a view illustrating a method for measuring an expiration time of a timer according to an embodiment.

According to an embodiment, the electronic device 101 (e.g., the first communication processor 212, the second communication processor 214, and/or the integrated communication processor 260) may transmit/receive voice data to/from the network 700 in operation 701. For example, the electronic device 101 may establish a call session with another electronic device through the network 700 and transmit/receive voice data based on the call session with the other electronic device. The electronic device 101 may receive a call end command. When the call end command is input, the electronic device 101 may transmit a BYE message to the network 700 in operation 703. Although not shown, the network 700 may provide the BYE message to the other electronic device. The other electronic device may provide a 200 OK message corresponding to the BYE message to the network 700. In operation 705, the network 700 may transmit the 200 OK message to the electronic device 101. Based on reception of the 200 OK message, the call session may be released. Thereafter, the electronic device 101 may not transmit/receive an additional message to/from the network 700. Based on the absence of an additional message, the network 700 may transmit an RRC release message to the electronic device 101 in operation 707.

According to an embodiment, the electronic device 101 may measure a time period ΔT from the time of receiving the 200 OK message to the time of receiving the RRC release message. The electronic device 101 may set the measured time period ΔT as the expiration time of the timer. For example, the electronic device 101 may set the measured time period ΔT as the expiration time of the timer corresponding to the connected area (e.g., TAI). For example, the electronic device 101 may set the measured time period ΔT as the expiration time of the timer corresponding to the 200 OK message of call session termination. For example, the electronic device 101 may set the measured time period ΔT as the expiration time of the timer corresponding to both the connected area (e.g., TAI) and the 200 OK message of call session termination. Meanwhile, the electronic device 101 may set a value larger or smaller than the measured time period ΔT as the expiration time of the timer.

Meanwhile, the electronic device 101 measures the time period ΔT from the time of reception of the 200 OK message to the time of reception of the RRC release message in FIG. 7A, but this is merely exemplary. If the electronic device 101 receives the BYE message, the electronic device 101 may measure the time period from the time of transmission of the 200 OK message to the time of reception of the RRC release message. As described above, the electronic device 101 may measure a time period from the transmission/reception time of the last message transmitted/received in a specific procedure to the reception time of the RRC release message, but this is exemplary. In another example, the electronic device 101 may measure the time period from the time of transmission of a message (e.g., BYE message) other than the last message in the procedure to the time of reception of the RRC release message and set it as the expiration time of the timer, but the message is not limited thereto as long as it is transmitted/received in the specific procedure. Even for other types of procedures than the call session release procedure of FIG. 7A, the electronic device 101 may measure the time period from the transmission/reception time of a specific message to the reception time of the RRC release message. The electronic device 101 may set the expiration time of the timer corresponding to a corresponding procedure (or corresponding event) based on the measured time period. The electronic device 101 may measure the time period for each SIM and set the expiration time of the timer based on the measurement result. For example, the type of message may not be limited to IMS-related messages, control plane-related messages, or user plane-related messages. Meanwhile, the setting, storage, and/or management of the expiration time of the timer may be performed by the NAS entity of the communication processors 212, 214, and/or 260, but is not limited thereto. Meanwhile, the expiration time of the set timer may be set to a specific lower limit value (e.g., 3 seconds) or more and a specific upper limit value (e.g., 15 seconds) or less. The electronic device 101 may directly use the newly measured value as the expiration time of the timer and, if the measured value is smaller than the previous value, set the average of the previous value and the measured value as the expiration time of the timer. The method for calculating the expiration time of the timer is not limited.

Table 1 shows an example of the expiration time of the timer stored in the electronic device 101.

**[Table 1]**

| |
|---|
| typedef struct t_LOCAL_RELEASE_TIME { |
| T_plmn_selected PLMN_TAI; |
| u8 NAS; |
| u8 SIP; |
| u8 DATA; |
| } T_LOCAL_RELEASE_TIME; |
| T_LOCAL_RELEASE_TIME LOCAL_RELEASE_TIME[10]; |

The "PLMN_TAI" field in Table 1 may include, e.g., identification information, e.g., TAI, about the connected area at the time of measurement. The "NAS" field may include the expiration time set based on measurement of the control plane related procedure in the TAI. The "SIP" field may include the expiration time set based on measurement of the IMS-related procedure. The "DATA" field may include the expiration time set based on measurement of user plane data. The electronic device 101 may store, e.g., 10 sets of information associated with the expiration time as shown in Table 1, but the number of sets is not limited.

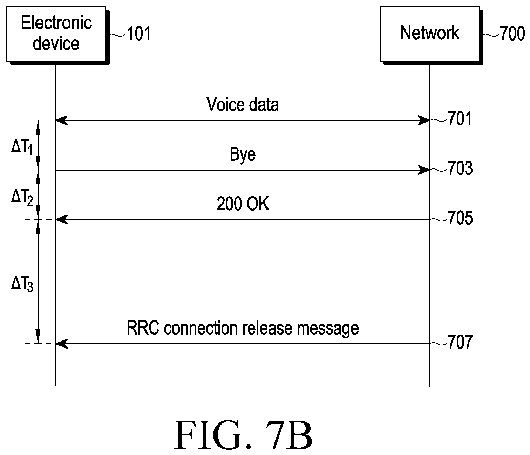

FIG. 7B is a view illustrating a method for measuring an expiration time of a timer according to an embodiment.

According to an embodiment, the electronic device 101 (e.g., the first communication processor 212, the second communication processor 214, and/or the integrated communication processor 260) may transmit/receive voice data to/from the network 700 in operation 701. The electronic device 101 may measure the time period until the time of reception of the RRC release message based on transmission or reception of any message. For example, the electronic device 101 may start measuring the time period based on transmission/reception of voice data in operation 701. Meanwhile, after the time period ΔT1 elapses, the electronic device 101 may transmit the BYE message in operation 703. The electronic device 101 may re-measure the time period based on the transmission of the BYE message. Meanwhile, after the time period ΔT2 elapses, the electronic device 101 may receive the 200 OK message in operation 705. Based on reception of the 200 OK message, the electronic device 101 may measure the time period again. Meanwhile, after the time period ΔT3 elapses, the electronic device 101 may receive the RRC release message in operation 707. The electronic device 101 may set the time period ΔT3 measured until the RRC release message is received as the expiration time of the timer. For example, the electronic device 101 may set the measured time period ΔT3 as the expiration time of the timer corresponding to the connected area (e.g., TAI). For example, the electronic device 101 may set the measured time period ΔT3 as the expiration time of the timer corresponding to the 200 OK message of call session termination. For example, the electronic device 101 may set the measured time period ΔT3 as the expiration time of the timer corresponding to both the connected area (e.g., TAI) and the 200 OK message of call session termination. Meanwhile, the electronic device 101 may set a value larger or smaller than the measured time period ΔT as the expiration time of the timer. Even for other types of procedures than the call session release procedure of FIG. 7B, the electronic device 101 may measure the time period from the transmission/reception time of any message to the reception time of the RRC release message. The electronic device 101 may set the expiration time of the timer corresponding to a corresponding procedure (or corresponding event) based on the measured time period. The electronic device 101 may measure the time period for each SIM and set the expiration time of the timer based on the measurement result.

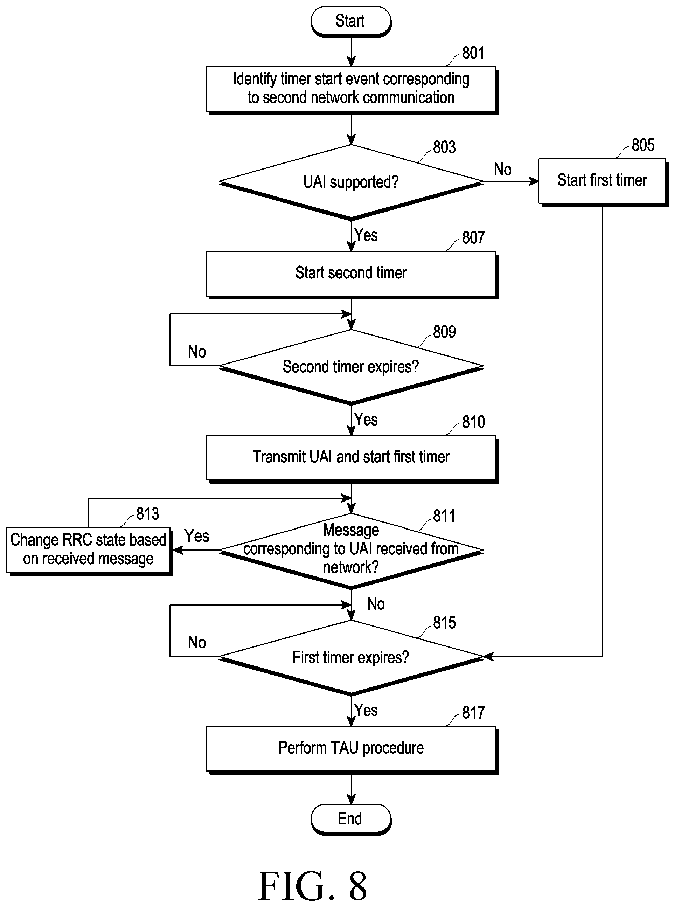

FIG. 8 is a view illustrating an operation method of an electronic device according to an embodiment.

According to an embodiment, the electronic device 101 (e.g., the first communication processor 212, the second communication processor 214, and/or the integrated communication processor 260) may identify the timer start event corresponding to the second network communication in operation 801. In operation 803, the electronic device 101 may identify whether UE assistance information (UAI) is supported. For example, the electronic device 101 may identify whether preferredRRC-State is supported, but is not limited thereto. When the UAI is not supported (no in 803), the electronic device 101 may start a first timer in operation 805. Here, the first timer may be a timer for performing the TAU procedure upon expiration as described above. The electronic device 101 may identify whether the first timer expires in operation 813. If the first timer expires (yes in 813), in operation 815, the electronic device 101 may perform a TAU procedure.

According to an embodiment, when the UAI is supported (yes in 803), the electronic device 101 may start a second timer in operation 807. Here, the second timer may be a timer set to transmit the UAI to a network upon expiration of the second timer. The start event of the second timer may be the same as, or at least partially different from, the start event of the first timer, but is not limited thereto. The expiration time of the second timer is not limited, and may be, e.g., 0. For example, when the expiration time of the second timer is smaller than the expiration time of the first timer (or the expiration time of the inactivity timer set in the network) by a threshold (e.g., time for UAI retransmission but not limited) or more, the second timer may be started, but is not limited. The electronic device 101 may identify whether the second timer expires in operation 809. If the second timer expires (yes in 809), in operation 810, the electronic device 101 may transmit a UAI and start the first timer. The information element (IE) of the UAI may include information indicating "idle" or "inactive" state. The IE of "preferredRRC-State-r16" of the UAI may include "idle" or "inactive" for RRC release, but is not limited. The network may transmit, e.g., an RRC release message based on the information included in the IE of "preferredRRC-State-r16". In operation 811, the electronic device 101 may identify whether the message corresponding to the UAI is received from the network. If the message corresponding to the UAI is received from the network before the first time expires (yes in 811), the electronic device may change the RRC state based on the received message in operation 813. The first timer may stop, e.g., based on entry of the RRC state into idle state by the message corresponding to the UAI. After the UAI is transmitted, the electronic device 101 may identify whether the first timer expires in operation 815. If the first timer expires (yes in 815), in operation 817, the electronic device 101 may perform a TAU procedure. Meanwhile, even when the first timer expires, if the UAI guard timer does not expire, the electronic device 101 may be configured to hold the TAU procedure and perform the TAU procedure after the UAI guard timer expires, but is not limited thereto. Meanwhile, if the expiration time of the first timer is not smaller than the expiration time of the inactivity timer set in the network by at least a threshold, the TAU procedure may be performed after the inactivity timer expires, but is not limited thereto. If the expiration time of the first timer is smaller than the expiration time of the inactivity timer set in the network by the threshold or more, the electronic device 101 may perform a TAU procedure based on expiration of the first timer.

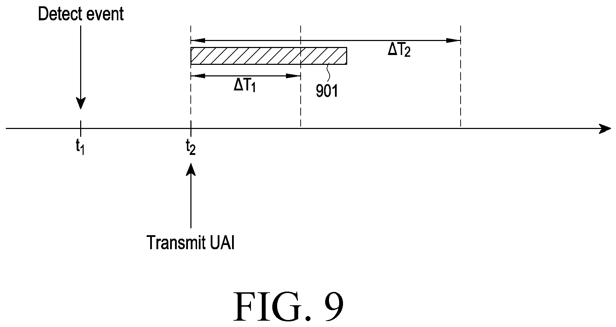

FIG. 9 is a view illustrating an operation method of an electronic device according to an embodiment.

According to an embodiment, the electronic device 101 (e.g., the first communication processor 212, the second communication processor 214, and/or the integrated communication processor 260) may detect an occurrence of a timer start event at a first time t1. As described above, the timer start event may be transmission/reception of a specific type of message and/or transmission/reception of any message, but the type is not limited. The electronic device 101 may transmit the UAI at a second time t2 based on detection of the occurrence of the timer start event. For example, as described with reference to FIG. 8, the electronic device 101 may transmit the UAI based on the expiration of the second timer, but without limitations thereto, the electronic device 101 may be configured to immediately transmit the UAI based on detection of the occurrence of the event. The IE of "preferredRRC-State-r16" of the UAI may include "idle" or "inactive" for RRC release, but is not limited. Meanwhile, for the UAI, a UAI guard timer 901 may be set. The UAI guard timer 901 may be set to, e.g., a time for the electronic device 101 to wait until a message corresponding to the UAI is received, but is not limited thereto.

Meanwhile, the electronic device 101 may start the first timer. For example, the electronic device 101 may start the first timer based on transmission of the UAI, but is not limited thereto, and may start the first timer at the first time t1 when the occurrence of the event is detected. If the expiration time ΔT2 of the first timer is later than the expiration time of the guard timer 901, the electronic device 101 may perform a TAU procedure at the expiration time ΔT2 of the first timer. If the expiration time ΔT1 of the first timer is earlier than the expiration time point of the guard timer 901, the electronic device 101 may perform a TAU procedure at the expiration time of the guard timer 901 even when the expiration time ΔT1 of the first timer expires. The guard timer 901 may have an expiration time set considering the time required to process the UAI in the network. Since performing the TAU is for the same result as retransmitting the UAI, it may be required to wait until the guard timer 901 expires.

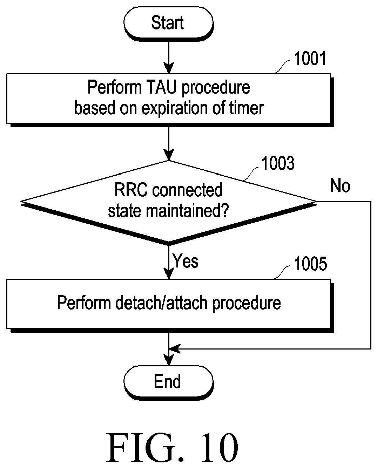

FIG. 10 is a view illustrating an operation method of an electronic device according to an embodiment.

According to an embodiment, the electronic device 101 (e.g., the first communication processor 212, the second communication processor 214, and/or the integrated communication processor 260) may perform a TAU procedure based on expiration of the timer associated with the second network communication corresponding to the second SIM 112 in operation 1001. As described above, the electronic device 101 may start the timer based on a timer start event and may perform a TAU procedure based on non-reception of an RRC release message until before the timer starts. As described above, based on the TAU procedure, the RRC state of the second network communication corresponding to the second SIM 112 of the electronic device 101 may be changed from the RRC_connected state to the RRC_Idle state. Meanwhile, although not shown, if the electronic device 101 supports the UAI (or if preferredRRC-State is supported), the UAI including "idle" or "inactive" for RRC release may be transmitted in the IE of "preferredRRC-State-r16". Even after transmitting the UAI, if the RRC state of the second network communication corresponding to the second SIM 112 remains in the RRC_connected state, the electronic device 101 may start the timer.

According to an embodiment, in operation 1003, the electronic device 101 may identify whether the RRC connected state of the second network communication corresponding to the second SIM 112 is maintained. By performing the TAU procedure, preferably, the RRC state may be switched from the RRC_connected state to the RRC_idle state. If the RRC state of the second network communication corresponding to the second SIM 112 is switched from the RRC_connected state to the RRC_idle state (no in 1003), the electronic device 101 may allocate the use of the first RF path exclusively to the first network communication corresponding to the first SIM 111 (or except for the monitoring period of the second network communication). If the RRC state of the second network communication corresponding to the second SIM 112 maintains the RRC_connected state (yes in 1003), the electronic device 101 may perform a detach/attach operation in operation 1005. For example, the electronic device 101 may perform at least one operation for detaching in the NAS layer. When detaching is performed in the NAS layer, the electronic device 101 may perform attaching in the NAS layer. The detach/attach procedure may be configured not to operate for the same reason until, e.g., the registration unit (e.g., TAI) is changed. At least portion of the detach/attach procedure may be performed, e.g., based on at least portion of the TAU procedure described above. As described above, a RRC state change may be possible when the RRC_connected state is maintained even by the TAU procedure.

According to an embodiment, an electronic device 101 may comprise one or more RF circuits 222, 224, 228, 232, 234, and 246 and at least one processor 120, 212, 214, and 260. The at least one processor 120, 212, 214, or 260 may be configured to allocate a first RF path of one of the RF circuits 222, 224, 228, 232, 234, or 246 to a first network communication corresponding to a first SIM during a first period and a second network communication corresponding to a second SIM during a second period, wherein the first SIM is activated during the first period and the second SIM is activated during the second period. The at least one processor 120, 212, 214, or 260 may be configured to identify an occurrence of a timer start event associated with a disconnection of the second network communication. The at least one processor 120, 212, 214, or 260 may be configured to start a timer based on information about an area to which the electronic device 101 is connected within the second network communication and/or an expiration time corresponding to the timer start event, in response to identifying the occurrence of the timer start event. The at least one processor 120, 212, 214, or 260 may be configured to perform a TAU procedure based on elapse of the expiration time of the timer.

According to an embodiment, the at least one processor 120, 212, 214, or 260 may be configured to, as at least part of identifying the occurrence of the timer start event associated with the disconnection of the second network communication, identify transmission and/or reception of a message of a first type among at least one designated type associated with the second network communication as the occurrence of the timer start event.

According to an embodiment, the at least one designated type may include a type of at least some of messages configured to be transmitted/received by at least one procedure suggested by an IMS standard, and/or a type of at least some of messages configured to be transmitted/received by at least one procedure suggested on a control plane.

According to an embodiment, the at least one processor 120, 212, 214, or 260 may be configured to, as at least part of starting the timer, start the timer having an expiration time corresponding to the message of the first type.

According to an embodiment, the at least one processor 120, 212, 214, or 260 may be configured to, as at least part of identifying the occurrence of the timer start event associated with the disconnection of the second network communication, identify transmission and/or reception of a message associated with the second network communication as the occurrence of the timer start event.

According to an embodiment, the at least one processor 120, 212, 214, or 260 may be configured to, as at least part of starting the timer, start the timer having an expiration time corresponding to the type of the message.

According to an embodiment, the at least one processor 120, 212, 214, or 260 may be further configured to, based on reception of an RRC release message based on the second network communication before the expiration time of the timer expires, release a connection corresponding to the second network communication. The at least one processor 120, 212, 214, or 260 may be further configured to allocate the use of the first RF path to the first network communication.

According to an embodiment, the at least one processor 120, 212, 214, or 260 may be further configured to allocate the use of the first RF path to the first network communication based on a change of an RRC state corresponding to the second network communication from an RRC_connected state to an RRC_idle state after performing the TAU procedure.

According to an embodiment, the at least one processor 120, 212, 214, or 260 may be further configured to perform at least one procedure for detaching for a NAS layer and at least one procedure for attaching to the NAS layer, based on an RRC state corresponding to the second network communication maintaining an RRC_connected state after performing the TAU procedure.

According to an embodiment, the at least one processor 120, 212, 214, or 260 may be configured to, as at least part of performing the TAU procedure, transmit an RRC connection request message based on an RRC state corresponding to the second network communication being an RRC_connected state.

According to an embodiment, the at least one processor 120, 212, 214, or 260 may be further configured to, before identifying the occurrence of the timer start event, measure a time period for determining the expiration time of the timer and determine the expiration time of the timer based on a result of the measurement.

According to an embodiment, the at least one processor 120, 212, 214, or 260 may be configured to, as at least part of measuring the time period for determining the expiration time of the timer, measure, as the time period, a difference between a first time of transmission and/or reception of a message of a type of at least some of messages configured to be transmitted/received by at least one procedure suggested in an IMS standard and/or a type of at least some of messages configured to be transmitted/received by at least one procedure suggested on a control plane and a second time of reception of an RRC release message based on the second network communication.

According to an embodiment, the at least one processor 120, 212, 214, or 260 may be configured to, as at least part of measuring the time period for determining the expiration time of the timer, measure, as the time period, a difference between a first time of transmission and/or reception of a message and a second time of reception of an RRC release message based on the second network communication.

According to an embodiment, the at least one processor 120, 212, 214, or 260 may be further configured to transmit, based on identifying the occurrence of the timer start event, a UAI containing information indicating idle or inactive state in an IE of preferredRRC-State-r16 based on the second network communication.

According to an embodiment, the at least one processor 120, 212, 214, or 260 may be configured to, as at least part of transmitting the UAI, start another timer based on identifying the occurrence of the timer start event and transmit the UAI based on expiration of the another timer.

According to an embodiment, the at least one processor 120, 212, 214, or 260 may be configured to, as at least part of performing the TAU procedure, perform the TAU procedure based on maintaining an RRC state corresponding to the second network communication as an RRC_connected state after the UAI is transmitted.

According to an embodiment, the at least one processor 120, 212, 214, or 260 may be configured to, as at least part of performing the TAU procedure, perform the TAU procedure in case that the expiration time of the timer is smaller than an inactivity time corresponding to the second network communication by a threshold time or more.

According to an embodiment, a method for operating an electronic device 101 may comprise allocating a first RF path of an RF circuit 222, 224, 228, 232, 234, 246 of the electronic device 101 to a first network communication corresponding to a first SIM during a first period and a second network communication corresponding to a second SIM during a second period, wherein the first SIM is activated during the first period and the second SIM is activated during the second period. The method for operating the electronic device 101 may comprise identifying an occurrence of a timer start event associated with a disconnection of the second network communication. The method for operating the electronic device 101 may comprise starting a timer having based on an area to which the electronic device 101 is connected within the second network communication and/or an expiration time corresponding to the timer start event, in response to identifying the occurrence of the timer start event. The method for operating the electronic device 101 may comprise performing a TAU procedure based on elapse of the expiration time of the timer.

According to an embodiment, identifying the occurrence of the timer start event associated with the disconnection of the second network communication may identify transmission and/or reception of a message of a first type among at least one designated type associated with the second network communication as the occurrence of the timer start event.

According to an embodiment, the at least one designated type may include a type of at least some of messages configured to be transmitted/received by at least one procedure suggested by an IMS standard, and/or a type of at least some of messages configured to be transmitted/received by at least one procedure suggested on a control plane.

According to an embodiment, the method for operating the electronic device 101 may further comprise starting the timer having an expiration time corresponding to the message of the first type.

According to an embodiment, identifying the occurrence of the timer start event associated with the disconnection of the second network communication may comprises identifying transmission and/or reception of a message associated with the second network communication as the occurrence of the timer start event.

According to an embodiment, starting the timer may start the timer having an expiration time corresponding to the type of the message.

According to an embodiment, the method for operating the electronic device 101 may further comprise, by the at least one processor 120, 212, 214, or 260, based on reception of an RRC release message based on the second network communication before the expiration time of the timer expires, releasing a connection corresponding to the second network communication and allocating the use of the first RF path to the first network communication.

According to an embodiment, the method for operating the electronic device 101 may further comprise, by the at least one processor 120, 212, 214, or 260, allocating the use of the first RF path to the first network communication based on a change of an RRC state corresponding to the second network communication from an RRC_connected state to an RRC_idle state after performing the TAU procedure.

According to an embodiment, the method for operating the electronic device 101 may further comprise, by the at least one processor 101, 212, 214, or 260, performing at least one procedure for detaching for a NAS layer and at least one procedure for attaching to the NAS layer, based on an RRC state corresponding to the second network communication maintaining an RRC_connected state after performing the TAU procedure.

According to an embodiment, performing the TAU procedure by the at least one processor 120, 212, 214, or 260 may transmit an RRC connection request message based on an RRC state corresponding to the second network communication being an RRC_connected state.

According to an embodiment, the method for operating the electronic device 101 may further comprise, by the at least one processor 120, 212, 214, or 260, before identifying the occurrence of the timer start event, measuring a time period for determining the expiration time of the timer and determine the expiration time of the timer based on a result of the measurement.

According to an embodiment, measuring the time period for determining the expiration time of the timer may measure, as the time period, a difference between a first time of transmission and/or reception of a message of a type of at least some of messages configured to be transmitted/received by at least one procedure suggested in an IMS standard and/or a type of at least some of messages configured to be transmitted/received by at least one procedure suggested on a control plane and a second time of reception of an RRC release message based on the second network communication.

According to an embodiment, measuring the time period for determining the expiration time of the timer may measure, as the time period, a difference between a first time of transmission and/or reception of a message and a second time of reception of an RRC release message based on the second network communication.

According to an embodiment, the method for operating the electronic device 101 may further comprise transmitting, based on identifying the occurrence of the timer start event, a UAI containing idle or inactive in an IE of preferredRRC-State-r16 based on the second network communication.

According to an embodiment, the method for operating the electronic device 101 may further comprise, as at least part of transmitting the UAI, starting another timer based on identifying the occurrence of the timer start event and transmit the UAI based on expiration of the another timer.

According to an embodiment, the method for operating the electronic device 101 may further comprise, as at least part of performing the TAU procedure, performing the TAU procedure based on maintaining an RRC state corresponding to the second network communication as an RRC_connected state after the UAI is transmitted.

According to an embodiment, performing the TAU procedure may perform the TAU procedure in case that the expiration time of the timer is smaller than an inactivity time corresponding to the second network communication by a threshold time or more.

The electronic device according to an embodiment of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

An embodiment of the disclosure and terms used therein are not intended to limit the technical features described in the disclosure to specific embodiments, and should be understood to include various modifications, equivalents, or substitutes of the embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or Further, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

It will be appreciated that the above-described embodiments, and their technical features, may be combined with one another in each and every combination, potentially unless there is a conflict between two embodiments or features. That is, each and every combination of two or more of the above-described embodiments is envisaged and included within the present disclosure. One or more features from any embodiment may be incorporated in any other embodiment, and provide a corresponding advantage or advantages.

Further aspects of the invention are set out in the following numbered paragraphs.

### Paragraph 1.

An electronic device (101) comprising:
an RF circuit (222, 224, 228, 232, 234, 246); and
at least one processor (120, 212, 214, 260), wherein the at least one processor (120, 212, 214, 260) is configured to:
allocate a first RF path of the RF circuit (222, 224, 228, 232, 234, 246) to a first network communication corresponding to a first SIM during a first period and a second network communication corresponding to a second SIM during a second period, wherein the first SIM is activated during the first period and the second SIM is activated during the second period;
identify an occurrence of a timer start event associated with a disconnection of the second network communication;
start a timer having information about an area to which the electronic device (101) is connected within the second network communication and/or an expiration time corresponding to the timer start event, based on identifying the occurrence of the timer start event; and
perform a TAU procedure based on elapse of the expiration time of the timer.

Paragraph 2. The electronic device (101) of paragraph 1, wherein the at least one processor (120, 212, 214, 260) is configured to, as at least part of identifying the occurrence of the timer start event associated with the disconnection of the second network communication, identify transmission and/or reception of a message of a first type among at least one designated type associated with the second network communication as the occurrence of the timer start event.

Paragraph 3. The electronic device (101) of paragraph 1 or 2, wherein the at least one designated type includes a type of at least some of messages configured to be transmitted/received by at least one procedure suggested by an IMS standard, and/or a type of at least some of messages configured to be transmitted/received by at least one procedure suggested on a control plane.

Paragraph 4. The electronic device (101) of any one of paragraphs 1 to 3, wherein the at least one processor (120, 212, 214, 260) is configured to, as at least part of starting the timer, start the timer having an expiration time corresponding to the message of the first type.

Paragraph 5. The electronic device (101) of any one of paragraphs 1 to 4, wherein the at least one processor (120, 212, 214, 260) is configured to, as at least part of identifying the occurrence of the timer start event associated with the disconnection of the second network communication, identify transmission and/or reception of a message associated with the second network communication as the occurrence of the timer start event.

Paragraph 6. The electronic device (101) of any one of paragraphs 1 to 5, wherein the at least one processor (120, 212, 214, 260) is configured to, as at least part of starting the timer, start the timer having an expiration time corresponding to the type of the message.

Paragraph 7. The electronic device (101) of any one of paragraphs 1 to 6, wherein the at least one processor (120, 212, 214, 260) is further configured to, based on reception of an RRC release message based on the second network communication before the expiration time of the timer expires:
release a connection corresponding to the second network communication; and
allocate the use of the first RF path to the first network communication.

Paragraph 8. The electronic device (101) of any one of paragraphs 1 to 7, wherein the at least one processor (120, 212, 214, 260) is further configured to allocate the use of the first RF path to the first network communication based on a change of an RRC state corresponding to the second network communication from an RRC_connected state to an RRC_idle state after performing the TAU procedure.

Paragraph 9. The electronic device (101) of any one of paragraphs 1 to 8, wherein the at least one processor (120, 212, 214, 260) is further configured to perform at least one procedure for detaching for a NAS layer and at least one procedure for attaching to the NAS layer, based on an RRC state corresponding to the second network communication maintaining an RRC_connected state after performing the TAU procedure.

Paragraph 10. The electronic device (101) of any one of paragraphs 1 to 9, wherein the at least one processor (120, 212, 214, 260) is configured to, as at least part of performing the TAU procedure, transmit an RRC connection request message based on an RRC state corresponding to the second network communication being an RRC_connected state.

Paragraph 11. The electronic device (101) of any one of paragraphs 1 to 10, wherein the at least one processor (120, 212, 214, 260) is further configured to, before identifying the occurrence of the timer start event:
measure a time period for determining the expiration time of the timer; and
determine the expiration time of the timer based on a result of the measurement.

Paragraph 12. The electronic device (101) of any one of paragraphs 1 to 11, wherein the at least one processor (120, 212, 214, 260) is configured to, as at least part of measuring the time period for determining the expiration time of the timer, measure, as the time period, a difference between a first time of transmission and/or reception of a message of a type of at least some of messages configured to be transmitted/received by at least one procedure suggested in an IMS standard and/or a type of at least some of messages configured to be transmitted/received by at least one procedure suggested on a control plane and a second time of reception of an RRC release message based on the second network communication.

Paragraph 13. The electronic device (101) of any one of paragraphs 1 to 12, wherein the at least one processor (120, 212, 214, 260) is configured to, as at least part of measuring the time period for determining the expiration time of the timer,
measure, as the time period, a difference between a first time of transmission and/or reception of a message and a second time of reception of an RRC release message based on the second network communication.

Paragraph 14. The electronic device (101) of any one of paragraphs 1 to 13, wherein the at least one processor (120, 212, 214, 260) is further configured to,
transmit, based on identifying the occurrence of the timer start event, a UAI containing idle or inactive in an IE of preferredRRC-State-r16 based on the second network communication.

Paragraph 15. The electronic device (101) of any one of paragraphs 1 to 14, wherein the at least one processor (120, 212, 214, 260) is configured to, as at least part of transmitting the UAI, start another timer based on identifying the occurrence of the timer start event and transmit the UAI based on expiration of the another timer.

Paragraph 16. The electronic device (101) of any one of paragraphs 1 to 15, wherein the at least one processor (120, 212, 214, 260) is configured to, as at least part of performing the TAU procedure, perform the TAU procedure based on maintaining an RRC state corresponding to the second network communication as an RRC_connected state after the UAI is transmitted.

Paragraph 17. The electronic device (101) of any one of paragraphs 1 to 16, wherein the at least one processor (120, 212, 214, 260) is configured to, as at least part of performing the TAU procedure, perform the TAU procedure in case that the expiration time of the timer is smaller than an inactivity time corresponding to the second network communication by a threshold time or more.

Paragraph18.

A method for operating an electronic device (101), comprising:
allocating a first RF path of an RF circuit (222, 224, 228, 232, 234, 246) of the electronic device (101) to a first network communication corresponding to a first SIM during a first period and a second network communication corresponding to a second SIM during a second period, wherein the first SIM is activated during the first period and the second SIM is activated during the second period;
identifying an occurrence of a timer start event associated with a disconnection of the second network communication;
starting a timer having information about an area to which the electronic device (101) is connected within the second network communication and/or an expiration time corresponding to the timer start event, based on identifying the occurrence of the timer start event; and
performing a TAU procedure based on elapse of the expiration time of the timer.

Paragraph 19. The method of paragraph 18, wherein the identifying the occurrence of the timer start event associated with the disconnection of the second network communication comprises identifying transmission and/or reception of a message of a first type among at least one designated type associated with the second network communication as the occurrence of the timer start event.

Paragraph 20. The method of paragraph 18 or 19, wherein the identifying the occurrence of the timer start event associated with the disconnection of the second network communication comprises identifying transmission and/or reception of a message associated with the second network communication as the occurrence of the timer start event.

## Claims

1. An electronic device (101) comprising:
a radio frequency, RF, circuit (222, 224, 228, 232, 234, 246); and
at least one processor (120, 212, 214, 260), wherein the at least one processor (120, 212, 214, 260) is configured to:
allocate a first RF path of the RF circuit (222, 224, 228, 232, 234, 246) to a first network communication corresponding to a first subscriber identity module, SIM, during a first period and a second network communication corresponding to a second SIM during a second period, wherein the first SIM is activated during the first period and the second SIM is activated during the second period;
identify an occurrence of a timer start event associated with a disconnection of the second network communication;
start a timer in response to identifying the occurrence of the timer start event, wherein an expiration time of the timer is set according to an area to which the electronic device (101) is connected, the area associated with the second network communication, and/or the timer start event; and
perform a tracking area update, TAU, procedure in response to an elapse of the expiration time of the timer.

2. The electronic device (101) of claim 1, wherein the at least one processor (120, 212, 214, 260) is configured to, as at least part of identifying the occurrence of the timer start event associated with the disconnection of the second network communication, identify transmission and/or reception of a message of a first type among at least one designated type associated with the second network communication as the occurrence of the timer start event.

3. The electronic device (101) of claim 1 or 2, wherein the at least one designated type includes a type of at least some of messages configured to be transmitted/received by at least one procedure suggested by an IP Multimedia Subsystem, IMS standard, and/or a type of at least some of messages configured to be transmitted/received by at least one procedure suggested on a control plane.

4. The electronic device (101) of any one of claims 1 to 3, wherein the at least one processor (120, 212, 214, 260) is configured to, as at least part of starting the timer, start the timer having the expiration time corresponding to the message of the first type.

5. The electronic device (101) of any one of claims 1 to 4, wherein the at least one processor (120, 212, 214, 260) is configured to, as at least part of identifying the occurrence of the timer start event associated with the disconnection of the second network communication, identify transmission and/or reception of a message associated with the second network communication as the occurrence of the timer start event.

6. The electronic device (101) of any one of claims 1 to 5, wherein the at least one processor (120, 212, 214, 260) is configured to, as at least part of starting the timer, start the timer having the expiration time corresponding to the type of the message.

7. The electronic device (101) of any one of claims 1 to 6, wherein the at least one processor (120, 212, 214, 260) is further configured to, based on reception of a radio resource control, RRC, release message associated with the second network communication before the expiration time of the timer expires:
release a connection corresponding to the second network communication; and
allocate the use of the first RF path to the first network communication.

8. The electronic device (101) of any one of claims 1 to 7, wherein the at least one processor (120, 212, 214, 260) is further configured to allocate the use of the first RF path to the first network communication based on a change of an RRC state corresponding to the second network communication from an RRC_connected state to an RRC_idle state after performing the TAU procedure.

9. The electronic device (101) of any one of claims 1 to 8, wherein the at least one processor (120, 212, 214, 260) is further configured to perform at least one procedure for detaching in a non-access stratum, NAS, layer and at least one procedure for attaching to the NAS layer, based on an RRC state corresponding to the second network communication maintaining an RRC_connected state after performing the TAU procedure.

10. The electronic device (101) of any one of claims 1 to 9, wherein the at least one processor (120, 212, 214, 260) is configured to, as at least part of performing the TAU procedure, transmit an RRC connection request message based on an RRC state corresponding to the second network communication being an RRC_connected state.

11. The electronic device (101) of any one of claims 1 to 10, wherein, before identifying the occurrence of the timer start event, the at least one processor (120, 212, 214, 260) is further configured to:
measure a time period for determining the expiration time of the timer; and
determine the expiration time of the timer based on a result of the measurement.

12. The electronic device (101) of any one of claims 1 to 11, wherein the at least one processor (120, 212, 214, 260) is configured to, as at least part of measuring the time period for determining the expiration time of the timer:
measure, as the time period, a difference between a first time of transmission and/or reception of a message of a type of at least some of messages configured to be transmitted/received by at least one procedure suggested in an IMS standard and/or a type of at least some of messages configured to be transmitted/received by at least one procedure suggested on a control plane and a second time of reception of an RRC release message based on the second network communication.

13. The electronic device (101) of any one of claims 1 to 12, wherein the at least one processor (120, 212, 214, 260) is configured to, as at least part of measuring the time period for determining the expiration time of the timer,
measure, as the time period, a difference between a first time of transmission and/or reception of a message and a second time of reception of an RRC release message based on the second network communication.

14. The electronic device (101) of any one of claims 1 to 13, wherein the at least one processor (120, 212, 214, 260) is further configured to:
transmit, based on identifying the occurrence of the timer start event, a UE assistance information, UAI, containing information indicating idle or inactive state in an information element, IE, of preferredRRC-State-r16 to a network associated with the second network communication.

15. A method for operating an electronic device (101), comprising:
allocating a first radio frequency, RF, path of an RF circuit (222, 224, 228, 232, 234, 246) of the electronic device (101) to a first network communication corresponding to a first subscriber identify module, SIM, during a first period and a second network communication corresponding to a second SIM during a second period, wherein the first SIM is activated during the first period and the second SIM is activated during the second period;
identifying an occurrence of a timer start event associated with a disconnection of the second network communication;
starting a timer in response to identifying the occurrence of the timer start event, wherein an expiration time of the timer is set according to an area to which the electronic device (101) is connected, the area associated with the second network communication, and/or the timer start event; and
performing a tracking area update, TAU, procedure in response to an elapse of the expiration time of the timer.
